# FASCICULE DE BREVET EUROPEEN

(11) **EP 4 326 570 B1**
(45) Date de publication et mention de la délivrance du brevet: **26.03.2025**
(21) Numéro de dépôt: 22710673.9
(22) Date de dépôt: 22.02.2022
(51) Int. Cl.: B60K 1/04, B62D 21/15, B62D 25/20, B62D 27/06

(54) **COMPARTIMENT DE BATTERIE DE TRACTION D'UN VEHICULE AUTOMOBILE ELECTRIQUE OU HYBRIDE**
TRAKTIONSBATTERIE-FACH EINES ELEKTRO- ODER HYBRIDKRAFTFAHRZEUGS
TRACTION BATTERY COMPARTMENT OF AN ELECTRIC OR HYBRID MOTOR VEHICLE

(30) Priorité: 20.04.2021 FR 2104086
(43) Date de publication de la demande: 28.02.2024
(73) Titulaire: Stellantis Auto SAS, 78300 Poissy (FR)
(72) Inventeur: WU, Tao, Shanghai 200233 (CN); CHOPARD, Sebastien, 90360 Petitefontaine (FR); HUGUON, Virginie, 92370 Chaville (FR); LI, Cai Yun, Shanghai 200233 (CN); SUN, Wei, Shanghai 200233 (CN)
(74) Mandataire: PSIP
(86) Numéro de dépôt international: PCT/FR2022/050312
(87) Numéro de publication internationale: WO 2022/223891

(56) Documents cités:
- DE-A1- 102015 111 749
- DE-A1- 102016 214 289
- US-A1- 2021 070 376

## Description

La présente invention revendique la priorité de la demande française N°2104086 déposée le 20.04.2021.

La présente invention concerne un compartiment de batterie de traction d'un véhicule automobile électrique ou hybride.

Les véhicules automobiles électriques ou hybrides comportent pour la traction une batterie composée de plusieurs cellules électrochimiques, généralement contenue dans un compartiment plat fermé pour assurer une protection, qui est disposé sous le plancher du véhicule.

L'homologation des véhicules automobiles nécessite des essais normalisés de chocs latéraux pour assurer à la fois la sécurité des passagers, et la tenue de la batterie afin d'éviter un endommagement pouvant entraîner des problèmes graves comme des émissions de gaz émis par les cellules générant un départ d'incendie ou une explosion.

Un type de compartiment de batterie connu, présenté notamment par le document DE 10 2016 214289 A1, comporte des cloisons dont la base est fixée au soubassement de ce compartiment et le dessus à un couvercle, pour former une liaison rigide entre ces deux éléments.

Les cloisons comportent dans leur épaisseur des perçages verticaux recevant chacun un rivet tubulaire fixé à la fois à la base et au couvercle. Chaque rivet tubulaire reçoit dans son perçage une vis venant par en dessous, traversant le compartiment complet dans son épaisseur, son extrémité supérieure dépassant au-dessus d'un perçage d'une tôle d'un élément de structure rigide de la caisse du véhicule, recevant un écrou pour fixer le compartiment de batterie sous la caisse du véhicule.

Toutefois en cas de choc latéral important sur le véhicule, appliquant un effort élevé sur un côté du compartiment de batterie, ce système de fixation du compartiment sous la caisse du véhicule peut présenter une rigidité et une résistance à la rupture élevées, ne permettant pas d'absorber une part suffisante d'énergie reçue par le compartiment. On obtient alors un risque plus important de déformation de ce compartiment, pouvant entraîner des dommages importants aux cellules électrochimiques avec des risques majeurs.

La présente invention a notamment pour but d'éviter ces problèmes de l'art antérieur.

Elle propose à cet effet un compartiment de batterie de véhicule automobile électrique ou hybride, comportant un soubassement plat perpendiculaire à un axe, et suivant cet axe d'un côté appelé côté supérieur un couvercle disposé dans un plan parallèle, formant entre eux un volume de réception de cellules électrochimiques, et comportant dans ce volume des cloisons intérieures fixées au soubassement, qui présentent vers le couvercle des parties épaisses recevant suivant l'axe dans cette épaisseur des vis de fixation du compartiment traversant des perçages du couvercle, ce compartiment étant remarquable en ce que les cloisons comportent entre leurs parties épaisses et le soubassement une partie de liaison qui est plus mince, présentant par rapport à cette partie épaisse une flexibilité latérale et une tenue en traction axiale qui sont réduites.

Un avantage de ce compartiment de batterie est que de manière simple, en réalisant des cloisons comportant une partie de liaison plus mince disposée près de la base, on obtient lors d'un choc sur le compartiment de batterie une certaine flexibilité latérale de ces liaisons permettant un déplacement du compartiment qui absorbe une énergie, ou une rupture de ces liaisons dans le cas d'une contrainte trop importante.

On baisse alors les valeurs de traction et de cisaillement maximum au niveau des vis de fixation du compartiment, et on diminue les contraintes qui peuvent s'appliquer sur les cellules électrochimiques fixées dans ce compartiment, ce qui donne une meilleure protection de la batterie.

Le système de batterie selon l'invention peut comporter de plus une ou plusieurs des caractéristiques suivantes, qui peuvent être combinées entre elles.

Avantageusement, les cloisons étant réalisées dans un alliage d'aluminium extrudé, chaque partie de liaison plus mince présente une plus petite largeur qui est inférieure à 10mm.

Avantageusement, chaque partie de liaison plus mince comporte en partant de la partie épaisse, de chaque côté une pente constante formant un resserrement vers le côté inférieur.

Avantageusement, les cloisons comportent après la partie plus mince des embases perpendiculaires plates qui sont fixées au soubassement du compartiment de batterie.

Dans ce cas, plusieurs cloisons peuvent être liées à une même embase. Avantageusement, le compartiment de batterie comporte des supports formés chacun par une tôle pliée, comprenant un plan supérieur disposant d'un perçage de fixation sur le véhicule, et de chaque côté un bord descendant vers le côté inférieur, se terminant par une patte qui est fixée sur le couvercle par une vis de fixation.

Dans ce cas, avantageusement le plan supérieur est écarté du couvercle par une distance supérieure à 10mm.

De plus, les deux bords descendant peuvent présenter des courbures effectuant un rapprochement de ces bords entre eux avant le couvercle.

En particulier, chaque bord descendant peut comporter deux courbures successives formant chacune un angle supérieur à 100°.

L'invention a aussi pour objet un véhicule automobile électrique ou hybride équipé d'une batterie d'alimentation de machines électriques de traction qui est intégrée dans un compartiment de batterie comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue de dessus du soubassement d'un compartiment de batterie selon l'invention ; et
[Fig. 2] est une vue en coupe verticale d'une cloison de ce bac.

Dans l'ensemble du document les côtés supérieur et inférieur et les expressions au-dessus ou en dessous, sont relatifs à un axe vertical lié à un véhicule posé sur une surface horizontale.

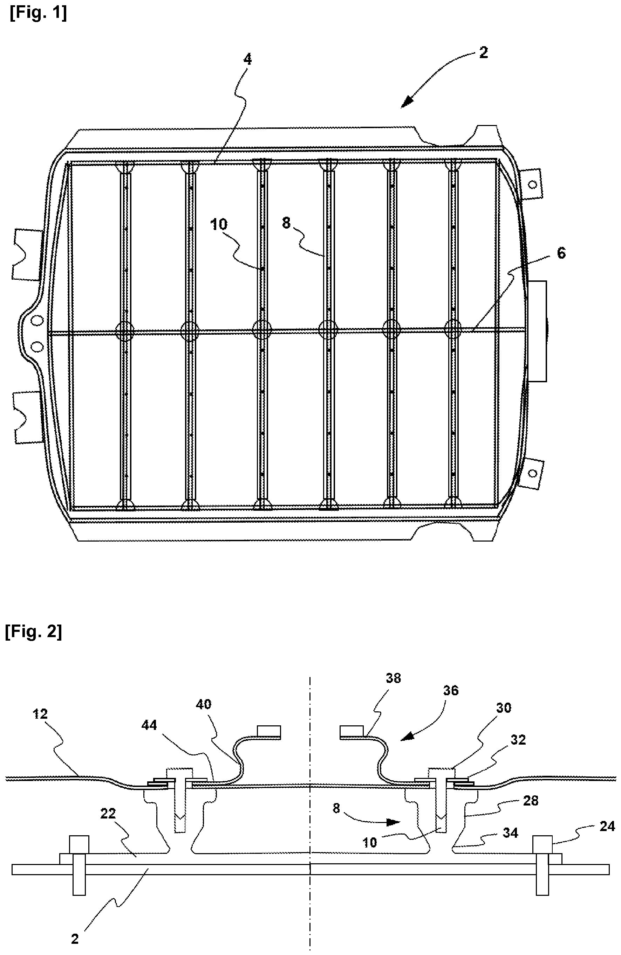

La figure 1 présente un soubassement 2 d'un compartiment de véhicule électrique ou hybride, comportant un fond plat encadré par un rebord 4, recevant une cloison longitudinale 6 séparant deux zones latérales, et des cloisons transversales 8 disposées suivant la largeur du soubassement, réparties sur la longueur de ces zones, délimitant des logements recevant les cellules électrochimiques de la batterie.

Chaque cloison transversale 8 comporte sur le dessus une succession de perçages verticaux 10 comprenant un filetage, afin de recevoir des vis de fixation venant par le dessus, traversant successivement un support puis un couvercle de ce compartiment qui ne sont pas représentés sur cette figure. La figure 2 présente le soubassement 2 recevant sur le dessus un système de cloison, comportant une embase plate 22 fixée par des vis d'embase 24 sur ce soubassement.

Le système de cloison comporte deux cloisons parallèles 8, comprenant chacune dans une section transversale une partie supérieure épaisse 28 présentant sur le dessus un perçage vertical fileté 10 disposé suivant son axe. Une vis de fixation 30 équipée d'une rondelle 32, montée par le dessus, traverse successivement un support 36 puis le couvercle 12, pour se visser dans chaque perçage 10 des cloisons 8.

Chaque cloison 8 comporte sur son plan supérieur autour de chaque perçage une rainure recevant un joint annulaire qui est serré entre le couvercle 12 et ce plan supérieur, afin d'assurer une étanchéité dans le compartiment de batterie.

Chaque cloison 8 symétrique par rapport à l'axe des vis de fixation 30, comporte entre chaque partie épaisse 28 recevant une vis et l'embase plate 22 liée au soubassement 2, une partie de liaison qui est plus mince 34. Avantageusement la partie de liaison plus mince 34 présente une largeur minimum inférieure à 10mm, comprenant par rapport à cette partie épaisse une flexibilité latérale et une tenue en traction axiale qui sont réduites.

Chaque partie épaisse de cloison 8 est prolongée de chaque côté vers le bas, au niveau de l'extrémité inférieure de la vis 30, par une face inclinée présentant une pente constante qui se rapproche vers l'axe du perçage 10 de manière à former un resserrement de l'épaisseur de la cloison, qui se termine par un rayon de raccordement avec l'embase plate 22.

De cette manière on assure dans la partie la plus basse de l'ensemble des cloisons 8, juste au-dessus de l'embase 22, des parties de liaison 34 de section fortement réduite qui par leur déformation, ou en cas de choc trop important par leur rupture, permet de limiter les efforts de traction ou de cisaillement transmis entre le compartiment de batterie et le support 36. Avantageusement, les cloisons 8 avec leur embase commune 22 sont formées par un alliage d'aluminium extrudé, permettant d'obtenir de manière économique un profilé constant avec une faible masse.

Chaque support 36 formé dans une tôle pliée, comporte un plan supérieur 38 espacé du couvercle 12, comprenant un perçage de fixation sous la caisse du véhicule, présentant de manière symétrique de chaque côté un bord de liaison 40 descendant vers une patte horizontale 44 posée à plat sur le couvercle 12, comportant le perçage recevant la vis de fixation 30.

Les deux cloisons 8 disposées de chaque côté d'un même support 36, sont liées à une même embase 22.

Chaque bord de liaison 40 est formé par deux pliages successifs, présentant des rayons constants identiques qui se succèdent, comprenant chacun un pliage avantageusement supérieur à 100°, d'environ 120°, de manière à constituer en partie inférieure un resserrement de ces bords vers le centre du support 36.

On obtient ainsi en cas de choc sur le compartiment de batterie, grâce à la hauteur des bords 40 une certaine flexibilité transversale permettant un décalage latéral de ce compartiment par rapport au plan supérieur de fixation 38, en absorbant une énergie de déformation.

On obtient aussi grâce au resserrement vers le centre des bords 40, qui ne sont pas droits et verticaux, une possibilité de flexion verticale de ces bords permettant en cas de choc sous le compartiment une compression des supports 36 qui ainsi absorbent une énergie.

## Revendications

1. Compartiment de batterie de véhicule automobile électrique ou hybride, comportant un soubassement plat (2) perpendiculaire à un axe, et suivant cet axe, d'un côté appelé côté supérieur un couvercle (12) disposé dans un plan parallèle, formant entre eux un volume de réception de cellules électrochimiques, et comportant dans ce volume des cloisons intérieures (8) fixées au soubassement (2), qui présentent vers le couvercle (2) des parties épaisses (28) recevant suivant l'axe dans cette épaisseur des vis de fixation du compartiment (30) traversant des perçages du couvercle (12), **caractérisé en ce que** les cloisons (8) comportent entre leurs parties épaisses (28) et le soubassement (2) une partie de liaison qui est plus mince (34), présentant par rapport à cette partie épaisse (28) une flexibilité latérale et une tenue en traction axiale qui sont réduites.

2. Compartiment de batterie selon la revendication 1, **caractérisé en ce que** les cloisons (8) étant réalisées dans un alliage d'aluminium extrudé, chaque partie de liaison plus mince (34) présente une plus petite largeur qui est inférieure à 10mm.

3. Compartiment de batterie selon la revendication 1 ou 2, **caractérisé en ce que** chaque partie de liaison plus mince (34) comporte en partant de la partie épaisse (28), de chaque côté une pente constante formant un resserrement vers le côté inférieur.

4. Compartiment de batterie selon l'une quelconque des revendications précédentes, **caractérisé en ce que** les cloisons (8) comportent après la partie plus mince (34) des embases perpendiculaires plates (22) qui sont fixées au soubassement du compartiment de batterie (2).

5. Compartiment de batterie selon la revendication 4, **caractérisé en ce que** plusieurs cloisons (8) sont liées à une même embase (22).

6. Compartiment de batterie selon l'une quelconque des revendications précédentes, **caractérisé en ce qu'**il comporte des supports (36) formés chacun par une tôle pliée, comprenant un plan supérieur (38) disposant d'un perçage de fixation sur le véhicule, et de chaque côté un bord descendant vers le côté inférieur (40), se terminant par une patte (44) qui est fixée sur le couvercle (12) par une vis de fixation (30).

7. Compartiment de batterie selon la revendication 6, **caractérisé en ce que** le plan supérieur (38) est écarté du couvercle (12) par une distance supérieure à 10mm.

8. Compartiment de batterie selon la revendication 6 ou 7, **caractérisé en ce que** les deux bords descendant (40) présentent des courbures effectuant un rapprochement de ces bords entre eux avant le couvercle (12).

9. Compartiment de batterie selon la revendication 8, **caractérisé en ce que** chaque bord descendant (40) comporte deux courbures successives formant chacune un angle supérieur à 100°.

10. Véhicule automobile électrique ou hybride équipé d'une batterie d'alimentation de machines électriques de traction, **caractérisé en ce que** cette batterie est intégrée dans un compartiment de batterie selon l'une quelconque des revendications précédentes.

## Patentansprüche

1. Batteriefach eines Elektro- oder Hybrid-Kraftfahrzeugs, bestehend aus einem flachen Boden (2), der senkrecht zu einer Achse steht, und entlang dieser Achse auf einer Seite, die als Oberseite bezeichnet wird, einer Abdeckung (12), die in einer parallelen Ebene angeordnet ist und zwischen sich ein Volumen bildet zur Aufnahme elektrochemischer Zellen, und umfassend in diesem Volumen an der Basis (2) befestigte innere Trennwände (8), die in Richtung der Abdeckung (2) dicke Teile (28) aufweisen, die entlang der Achse in dieser Dicke aufnehmen Fachbefestigungsschraube (30), die durch Löcher in der Abdeckung (12) verläuft, **dadurch gekennzeichnet, dass** die Trennwände (8) zwischen ihren dicken Teilen (28) und der Basis (2) einen dünneren Verbindungsteil (34) aufweisen, der Folgendes aufweist: In Bezug auf diesen dicken Teil (28) sind die seitliche Flexibilität und der axiale Zugwiderstand verringert.

2. Batteriefach nach Anspruch 1, **dadurch gekennzeichnet, dass** die Trennwände (8) aus einer stranggepressten Aluminiumlegierung bestehen und jedes dünnere Verbindungsteil (34) eine geringere Breite aufweist, die weniger als 10 mm beträgt.

3. Batteriefach nach Anspruch 1 oder 2, **dadurch gekennzeichnet, dass** jedes dünnere Verbindungsteil (34) ausgehend vom dicken Teil (28) auf jeder Seite eine konstante Neigung aufweist, die eine Verengung zur Unterseite hin bildet.

4. Batteriefach nach einem der vorhergehenden Ansprüche, **dadurch gekennzeichnet, dass** die Trennwände (8) nach dem dünneren Teil (34) flache senkrechte Sockel (22) umfassen, die am Boden des Batteriefachs (2) befestigt sind.

5. Batteriefach nach Anspruch 4, **dadurch gekennzeichnet, dass** mehrere Trennwände (8) mit demselben Boden (22) verbunden sind.

6. Batteriefach nach einem der vorhergehenden Ansprüche, **dadurch gekennzeichnet, dass** es Stützen (36) umfasst, die jeweils aus einem gefalteten Blech bestehen und eine obere Ebene (38) mit einem Befestigungsloch am Fahrzeug und auf jeder Seite einen abfallenden Rand umfassen zur Unterseite (40) hin und endet in einer Lasche (44), die mit einer Befestigungsschraube (30) am Deckel (12) befestigt ist.

7. Batteriefach nach Anspruch 6, **dadurch gekennzeichnet, dass** die obere Ebene (38) einen Abstand von mehr als 10 mm vom Deckel (12) aufweist.

8. Batteriefach nach Anspruch 6 oder 7, **dadurch gekennzeichnet, dass** die beiden abfallenden Kanten (40) Krümmungen aufweisen, die diese Kanten vor dem Deckel (12) einander näher bringen.

9. Batteriefach nach Anspruch 8, **dadurch gekennzeichnet, dass** jede abfallende Kante (40) zwei aufeinanderfolgende Krümmungen aufweist, die jeweils einen Winkel von mehr als 100° bilden.

10. Elektro- oder Hybridkraftfahrzeug, ausgestattet mit einer Leistungsbatterie für elektrische Traktionsmaschinen, **dadurch gekennzeichnet, dass** diese Batterie in einem Batteriefach nach einem der vorhergehenden Ansprüche integriert ist.

## Claims

1. Battery compartment of an electric or hybrid motor vehicle, comprising a flat base (2) perpendicular to an axis, and along this axis, on one side called the upper side a cover (12) arranged in a parallel plane, forming between them a volume for receiving electrochemical cells, and comprising in this volume internal partitions (8) fixed to the base (2), which have towards the cover (2) thick parts (28) receiving along the axis in this thickness screws for fixing the compartment (30) passing through holes in the cover (12), **characterized in that** the partitions (8) have between their thick parts (28) and the base (2) a connecting part which is thinner (34), having compared to this thick part (28) a lateral flexibility and a resistance to axial traction which are reduced.

2. Battery compartment according to claim 1, **characterized in that** the partitions (8) being made of an extruded aluminum alloy, each thinner connecting part (34) has a smaller width which is less than 10 mm.

3. Battery compartment according to claim 1 or 2, **characterized in that** each thinner connecting part (34) has, starting from the thick part (28), on each side a constant slope forming a narrowing towards the lower side.

4. Battery compartment according to any one of the preceding claims, **characterized in that** the partitions (8) comprise, after the thinner part (34), flat perpendicular bases (22) which are fixed to the base of the battery compartment (2).

5. Battery compartment according to claim 4, **characterized in that** several partitions (8) are connected to the same base (22).

6. Battery compartment according to any one of the preceding claims, **characterized in that** it comprises supports (36) each formed by a folded sheet metal, comprising an upper plane (38) having a fixing hole on the vehicle, and on each side an edge descending towards the lower side (40), ending in a tab (44) which is fixed on the cover (12) by a fixing screw (30).

7. Battery compartment according to claim 6, **characterized in that** the upper plane (38) is spaced from the cover (12) by a distance greater than 10 mm.

8. Battery compartment according to claim 6 or 7, **characterized in that** the two descending edges (40) have curvatures bringing these edges together before the cover (12).

9. Battery compartment according to claim 8, **characterized in that** each descending edge (40) comprises two successive curvatures each forming an angle greater than 100°.

10. Electric or hybrid motor vehicle equipped with a power supply battery for electric traction machines, **characterized in that** this battery is integrated in a battery compartment according to any one of the preceding claims.
